# EUROPÄISCHE PATENTANMELDUNG

(11) **EP 2 522 926 A2**
(43) Veröffentlichungstag der Anmeldung: **14.11.2012**
(21) Anmeldenummer: 12002903.8
(22) Anmeldetag: 26.04.2012
(51) Int. Cl.: F24J 2/04, F24J 2/52

(54) **Bauelementanordnung für ein Dach, Demontagewerkzeug sowie Verfahren zur Montage einer Bauelementanordnung**

(30) Priorität: 12.05.2011 DE 102011101317
(71) Anmelder: ROTO FRANK AG, 70771 Leinfelden-Echterdingen (DE)
(72) Erfinder: Kloepfer, Hannes, 97980 Bad Mergentheim (DE); Lieb, Christian, 97999 Neuses (DE)
(74) Vertreter: Grosse, Rainer

(57) **Zusammenfassung**

Die Erfindung betrifft eine Bauelementanordnung (1) für ein Dach (2), mit an dem Dach (2) oder in einer Öffnung des Dachs (2) benachbart zueinander anzuordnenden Bauelementen (3,4), wobei wenigstens eine zwischen den Bauelementen (3,4) vorliegende Stoßfuge (5) zumindest bereichsweise von einer in einer Aufschieberichtung (8) auf die Bauelemente (3,4) aufschiebbaren Abdeckleiste (6,7) umfangen ist. Dabei ist vorgesehen, dass die Abdeckleiste (6,7) in mindestens einer Raststellung mittels einer, insbesondere lösbaren Rastverbindung (31) zumindest entgegen der Aufschieberichtung (8) an den Bauelementen (3,4) gehalten ist. Die Erfindung betrifft weiterhin ein Demontagewerkzeug (32) sowie ein Verfahren zur Montage einer Bauelementanordnung (1).

## Beschreibung

Die Erfindung betrifft eine Bauelementanordnung für ein Dach, mit an dem Dach oder in einer Öffnung des Dachs benachbart zueinander anzuordnenden Bauelementen, wobei wenigstens eine zwischen den Bauelementen vorliegende Stoßfuge zumindest bereichsweise von einer in einer Aufschieberichtung auf die Bauelemente aufschiebbaren Abdeckleiste überfangen ist. Die Anmeldung betrifft weiterhin ein Demontagewerkzeug zur Demontage einer Bauelementanordnung sowie ein Verfahren zur Montage einer Bauelementanordnung.

Bauelementanordnungen der eingangs genannten Art sind aus dem Stand der Technik bekannt. Sie bestehen aus mindestens zwei Bauelementen, welche nebeneinander beziehungsweise benachbart zueinander anordenbar beziehungsweise nach erfolgter Montage angeordnet sind. Bei der Anordnung der Bauelemente benachbart zueinander während der Montage entsteht zwischen jeweils zwei der Bauelemente die Stoßfuge. Die Stoßfuge stellt dabei einen Zwischenraum dar, welcher zwischen den Bauelementen vorliegt. Die Abmessungen der Stoßfuge in lateraler Richtung, also von einem der Bauelemente zu dem nächstgelegenen benachbarten der Bauelemente, können prinzipiell beliebig sein, sind vorzugsweise jedoch möglichst gering.

Die Bauelemente können zur Ausbildung der Stoßfuge zumindest bereichsweise auch unmittelbar aufeinander aufliegen. In diesem Fall sind die Abmessungen der Stoßfuge in lateraler Richtung zumindest in diesen Bereichen im Wesentlichen gleich Null. Zum Erzielen eines einwandfreien optischen Eindrucks und zudem zum Schutz der Stoßfuge vor Umwelteinflüssen, insbesondere vor Regen, soll die Stoßfuge zumindest bereichsweise von dem Abdeckelement überfangen und damit abgedeckt sein. Die Abdeckleiste ist also vorzugsweise derart über der Stoßfuge angeordnet, dass diese von außen nicht sichtbar ist beziehungsweise dass kein Wasser, insbesondere Regen, durch die Stoßfuge zwischen die Bauelemente gelangen kann.

Zur einfachen Montage der Bauelementanordnung soll die Abdeckleiste in der Aufschieberichtung auf die Bauelemente aufschiebbar sein. Vorzugsweise ist dabei vorgesehen, dass das Aufschieben lediglich in die Aufschieberichtung vorgenommen werden kann. Die Aufschieberichtung liegt üblicherweise im Wesentlichen parallel zu einer Längserstreckung der Stoßfuge. Nach dem Aufschieben der Abdeckleiste wird diese derart in Bezug auf die Bauelemente befestigt, dass sie nicht mehr entgegen der Aufschieberichtung von diesen entfernbar ist. Das bedeutet, dass die Abdeckleiste nach dem Befestigen, also nach Abschluss der Montage, derart gehalten ist, dass sie nicht mehr entgegen der Aufschieberichtung und vorzugsweise auch in Aufschieberichtung in Bezug auf die Bauelemente gehalten ist.

Bei aus dem Stand der Technik bekannten Bauelementanordnungen ist es dazu vorgesehen, dass eine Schraube eine randgeschlossene Ausnehmung der Abdeckleiste durchgreift und in einen Bereich eines der Bauelemente eingreift. Die Abdeckleiste ist also mit den Bauelementen verschraubt und so gegen ein Entfernen entgegen der Aufschieberichtung an diesen gehalten. Um den optischen Eindruck der Bauelementanordnung möglichst wenig durch die die Abdeckleiste durchgreifende Schraube zu beeinträchtigen, wird diese im Bereich einer unteren Stirnseite der Abdeckleiste angebracht. Dies hat jedoch zum einen den Nachteil, dass bei einer starken Belastung der Abdeckleiste entgegen der Aufschieberichtung - beispielsweise von durch Eis oder Schnee auf der Abdeckleiste verursachten Kräften - eine Verformung der Abdeckleiste im Bereich der Schraube auftreten kann. Die Verformung kann prinzipiell auf einfache Weise, beispielsweise durch Vorsehen einer zusätzlichen Unterlegmutter, vermieden werden.

Zum anderen ist die Montage von Abdeckleisten bei Bauelementen, welche in Richtung der Aufschieberichtung benachbart zueinander angeordnet sind, erschwert, weil nach der Anordnung der Bauelemente an dem Dach beziehungsweise in der Öffnung des Dachs nicht mehr ohne Weiteres die Schraube durch die Stirnseite zu deren Befestigung eingebracht werden kann. Die Schraube wird also stets leicht schräg an der Abdeckleiste vorliegen, um ein Einschrauben überhaupt zu ermöglichen. Dies beeinträchtigt zwar den optischen Eindruck lediglich in sehr geringfügiger Weise, insbesondere weil in dem beschriebenen Fall auf die Abdeckleiste weitere Bauelemente folgen, sodass die Schraube von diesen im Wesentlichen verdeckt wird. Es ist jedoch wünschenswert, die Optik der Bauelementanordnung und die Stabilität gegenüber den vorstehend beschriebenen Kräften zu verbessern und gleichzeitig die Montage zu vereinfachen.

Es ist daher die Aufgabe der Erfindung, eine Bauelementanordnung für ein Dach bereitzustellen, welche die genannten Nachteile weiter vermindert, insbesondere also sowohl eine einfache Montage ermöglicht als auch eine verbesserte Stabilität der Abdeckleiste gegenüber Schnee- oder Eiskräften aufweist.

Dies wird erfindungsgemäß mit einer Bauelementanordnung mit den Merkmalen des Anspruchs 1 erreicht. Dabei ist vorgesehen, dass die Abdeckleiste in mindestens einer Raststellung mittels einer, insbesondere lösbaren Rastverbindung zumindest entgegen der Aufschieberichtung an den Bauelementen gehalten ist. Es ist demnach vorgesehen, die Abdeckleiste ohne ein kraftschlüssiges Befestigungsmittel in Bezug zu den Bauelementen entgegen der Aufschieberichtung festzusetzen. Dies erfolgt mittels der Rastverbindung, also einer formschlüssigen Verbindung. Die Rastverbindung soll dabei in der mindestens einen Raststellung der Abdeckleiste in Bezug zu den Bauelementen vorliegen. Das bedeutet, dass bei der Montage der Bauelementanordnung zunächst die Bauelemente an dem Dach oder in der Öffnung des Dachs benachbart zueinander angeordnet werden. Anschließend wird die Abdeckleiste in der Aufschieberichtung auf die Bauelemente aufgeschoben. Sobald die Abdeckleiste in ihre Raststellung gelangt, wird die Rastverbindung zwischen der Abdeckleiste und den Bauelementen hergestellt, sodass die Abdeckleiste nicht mehr entgegen der Aufschieberichtung aus der Raststellung heraus verlagerbar ist.

Vorzugsweise liegt die Raststellung in einer Montageposition der Abdeckleiste vor, also in einer Stellung, in welcher die Abdeckleiste nach der Montage in Bezug zu den Bauelementen vorliegen soll. Vorteilhafterweise ist die Rastverbindung lösbar, sodass eine zerstörungsfreie Demontage der Abdeckleiste möglich ist. Das Halten der Abdeckleiste mittels der Rastverbindung ermöglicht eine schraubenlose Befestigung des Abdeckblechs an den Bauelementen, welche zudem unempfindlicher gegenüber Schnee- und Eiskräften ist. Insgesamt wird also eine Bauelementanordnung erzielt, welche einen deutlich verbesserten optischen Eindruck bewirkt. Die Bauelementanordnung ist beispielsweise eine Solaranordnung mit mehreren Solareinrichtungen als Bauelemente. Die Bauelementanordnung kann fabrikmäßig vorgefertigt sein. Sie ist üblicherweise dazu vorgesehen, an der Einbaustelle zu einer großflächigen Bauelementanordnung beziehungsweise Solaranordnung zusammengesetzt zu werden.

Eine Weiterbildung der Erfindung sieht vor, dass die Abdeckleiste zum Ausbilden der Rastverbindung mindestens ein Rastelement aufweist und an wenigstens einem der Bauelemente ein entsprechendes Rastgegenelement vorgesehen ist, wobei das Rastelement in der Raststellung der Abdeckleiste mit dem Rastgegenelement rastend zusammenwirkt. Das Rastelement ist an der Abdeckleiste befestigt beziehungsweise wird von dieser ausgebildet. Ebenso liegt an dem wenigstens einen der Bauelemente das Rastgegenelement vor, welches mit dem Rastelement zum rastenden Halten der Abdeckleiste in der mindestens einen Raststellung korrespondiert. Zum rastenden Halten der Abdeckleiste in Bezug auf die Bauelemente bilden das Rastelement und das Rastgegenelement beispielsweise einen Hintergriff aus. Das bedeutet, dass das Rastelement in der Raststellung das Rastgegenelement derart hintergreift, dass die Abdeckleiste nicht mehr entgegen der Aufschieberichtung verlagerbar ist.

Selbstredend können in Aufschieberichtung mehrere Raststellungen vorliegen, welche mittels mehrerer Rastgegenelemente erzielt werden. Bis zum Erreichen der jeweiligen Raststellung kann die Abdeckleiste auch entgegen der Aufschieberichtung verlagert werden. Erst nach dem Erreichen der Raststellung ist ein Verlagern über diese hinaus entgegen der Aufschieberichtung nicht mehr möglich. Es ist auch vorstellbar, dass das Rastgegenelement eine Rastausnehmung aufweist, in welche das Rastgegenelement in der Raststellung rastend eingreift und so die Rastverbindung herstellt.

Eine Weiterbildung der Erfindung sieht vor, dass die Bauelemente wenigstens eine Hintergriffsschiene aufweisen, die von einem Hintergriffsbereich der Abdeckleiste hintergriffen ist und so eine Führung für das Aufschieben der Abdeckleiste bilden. Vorzugsweise ist die Führung derart ausgebildet, dass sie während des Aufschiebens der Abdeckleiste ein Verlagern der Abdeckleiste lediglich in Aufschieberichtung beziehungsweise entgegen der Aufschieberichtung zulässt. Mittels der Führung ist demnach die Abdeckleiste in lateraler Richtung und in vertikaler Richtung (welche jeweils senkrecht aufeinander sowie auf der Aufschieberichtung stehen) im Wesentlichen spielfrei oder mit geringem Spiel gehalten beziehungsweise gelagert.

Die Führung der Abdeckleiste wird durch das Zusammenwirken der Hintergriffsschiene mit dem Hintergriffsbereich der Abdeckleiste bewirkt. Vorzugsweise ist an jedem Bauelement mindestens eine Hintergriffsschiene vorgesehen, welche jeweils mit einem Hintergriffsbereich der Abdeckleiste zusammenwirkt. Insbesondere kann auf an einander angrenzenden Seiten der Bauelemente jeweils eine Hintergriffsschiene vorgesehen sein, sodass zwei Bauelemente jeweils zwei miteinander korrespondierende Hintergriffsschienen aufweisen, welche gemeinsam die Führung der Abdeckschiene mit ausbilden. Diese miteinander korrespondierenden Hintergriffsschienen können beispielsweise über voneinander fort gerichtete Hintergriffsflügel verfügen, welche beide von dem Hintergriffsbereich beziehungsweise mehreren Hintergriffsbereichen der Abdeckleiste hintergriffen sind. Auf diese Weise ist eine sichere Führung der Abdeckleiste bezüglich der Bauelemente sichergestellt.

Eine Weiterbildung der Erfindung sieht vor, dass die Hintergriffsschiene über wenigstens ein Befestigungsmittel mit den Bauelementen verbunden ist und das Befestigungsmittel zumindest bereichsweise das Rastgegenelement bildet. Somit müssen keine zusätzlichen Rastgegenelemente an den Bauelementen vorgesehen werden. Vielmehr werden die Rastgegenelemente von dem Befestigungsmittel beziehungsweise einem Bereich von diesem gebildet. Das Befestigungsmittel dient dabei dem Befestigen der Hintergriffsschiene an dem entsprechenden Bauelement. Beispielsweise ist das Befestigungsmittel eine Schraube, mit welcher die Hintergriffsschiene mit dem Bauelement verschraubt ist. In diesem Fall bildet beispielsweise ein Kopf der Schraube das Rastgegenelement, mit welchem das Rastelement der Abdeckleiste zum rastenden Halten zusammenwirkt.

Eine Weiterbildung der Erfindung sieht vor, dass das Rastelement federnd an der Abdeckleiste gehalten ist, wobei das Rastelement und/oder die Abdeckleiste die Federwirkung bewirken, welche einen Rastbereich des Rastelements in Richtung der Bauelemente drängt. Der Rastbereich ist dabei derjenige Bereich des Rastelements, welcher mit dem Rastgegenelement zum rastenden Halten, also zur Ausbildung der Rastverbindung, zusammenwirkt. Dazu ist es notwendig, dass der Rastbereich in Richtung der Bauelemente gedrängt wird. Zu diesem Zweck ist das Rastelement derart federnd an der Abdeckleiste gehalten, dass die Federkraft in Richtung der Bauelemente vorliegt. Die Federkraft kann entweder von dem Rastelement, der Abdeckleiste oder beiden hervorgerufen werden. Beispielsweise kann das Rastelement beziehungsweise die Abdeckleiste also nicht federnd sein und das jeweils andere Element die Federwirkung hervorrufen. Alternativ können auch sowohl das Rastelement als auch die Abdeckleiste federnd sein.

Eine Weiterbildung der Erfindung sieht vor, dass das Rastelement einen an ein Demontagewerkzeug angepassten Betätigungsbereich aufweist. Der Betätigungsbereich dient dazu, durch Zusammenwirken mit dem Demontagewerkzeug die Rastverbindung zu lösen, sodass die Abdeckleiste entgegen der Aufschieberichtung verlagert und insbesondere von den Bauelementen entfernt werden kann. Der Betätigungsbereich ist vorzugsweise derart ausgestaltet, dass bereits das Einführen des Demontagewerkzeugs in den Betätigungsbereich ein Lösen der Rastverbindung bewirkt.

Eine Weiterbildung der Erfindung sieht vor, dass der Betätigungsbereich eine Durchtrittsöffnung aufweist, durch welche das Demontagewerkzeug zwischen Rastelement und wenigstens einem der Bauelemente zur Erzeugung, insbesondere durch Hebelwirkung, einer das Rastelement von dem Bauelement fort verlagernden Kraft anordenbar ist. Die Durchtrittsöffnung kann beispielsweise in lateraler Richtung mittig in dem Betätigungsbereich vorliegen. Insbesondere ist der Betätigungsbereich Teil des Rastbereichs. Auf diese Weise wird eine seitliche Führung des Demontagewerkzeugs in dem Betätigungsbereich beziehungsweise der Durchtrittsöffnung bewirkt. Die Durchtrittsöffnung gibt einen Bereich frei, welcher zwischen dem Rastelement und dem Bauelement liegt.

Im Fall der mittigen Anordnung der Durchtrittsöffnung in dem Betätigungsbereich stützt sich das Rastelement mit mindestens einem seitlich von der Durchtrittsöffnung angeordneten Rastbereich an dem Rastgegenelement zum Ausbilden der Rastverbindung ab. Nach dem Einbringen des Demontagewerkzeugs in die Durchtrittsöffnung, also dem Anordnen zwischen Rastelement und Bauelement, kann mittels des Demontagewerkzeugs eine Kraft bewirkt werden, welche das Rastelement beziehungsweise dessen Rastbereich von dem Bauelement fort verlagert und so die Rastverbindung löst, indem eine Verlagerung des Abdeckelements entgegen der Aufschieberichtung über die Raststellung hinweg ermöglicht wird.

Alternativ kann die Kraft auch bereits durch das Einbringen des Demontagewerkzeugs in die Durchtrittsöffnung bewirkt sein. Insbesondere wird die Kraft durch Hebelwirkung bewirkt, sodass ein Benutzer des Demontagewerkzeugs lediglich eine geringe Kraft aufbringen muss, um das Rastelement von dem Bauelement fortzuverlagern. Beispielsweise wird die Kraft durch eine im Bereich der Durchtrittsöffnung vorgesehene schiefe Ebene des Betätigungsbereichs bewirkt, welche mit einer korrespondierenden schiefen Ebene des Demontagewerkzeugs bei dessen Einbringen in die Durchtrittsöffnung die Kraft erzeugt.

Eine Weiterbildung der Erfindung sieht vor, dass das Rastelement mittels Durchsetzfügen an der Abdeckleiste befestigt ist. Auf diese Weise wird sowohl eine Beeinträchtigung einer Beschichtung der Abdeckleiste (welche insbesondere bei einem Schweißvorgang auftreten könnte) als auch eine Ausnehmung in der Abdeckleiste (welche bei Befestigung mittels einer Schraubverbindung notwendig wäre) vermieden. Vielmehr ist diese auch im Bereich der Befestigungsstelle des Rastelements an der Abdeckleiste geschlossen ausgebildet, sodass kein Wasser durch die Abdeckleiste hindurch gelangen kann. Das Durchsetzfügen ist zudem eine einfach herzustellende und preisgünstige Befestigungsform.

Eine Weiterbildung der Erfindung sieht vor, dass das Rastelement eine Rastzunge ist, die zur Versteifung in Längsrichtung zwei gegeneinander angewinkelte Schenkel aufweist. Die Versteifung kann dabei dazu vorgesehen sein, die Federwirkung des Rastelements zu vergrößern oder aber das Rastelement derart steif auszubilden, dass im Wesentlichen keine Federwirkung auftritt. In diesem Fall wird die Federwirkung allein von der Abdeckleiste erzeugt, das Rastelement selbst ist lediglich verlagerbar, nicht jedoch verformbar. Zur Versteifung sollen die mindestens zwei gegeneinander angewinkelten Schenkel vorgesehen sein. Beispielsweise ist der Winkel, welcher zwischen den Schenkeln eingeschlossen ist, kleiner als 180°, insbesondere zwischen 150° und 160°, bevorzugt 151°. Auf diese Weise wird eine sehr hohe Steifigkeit des Rastelements beziehungsweise der Rastzunge erreicht.

Eine Weiterbildung der Erfindung sieht vor, dass das Rastelement aus Metall, insbesondere Stahl, vorzugsweise Edelstahl, oder Aluminium besteht. Grundsätzlich kann das Rastelement aus einem beliebigen Material, also auch Kunststoff oder dergleichen, bestehen. Um eine besonders gute Lebensdauer und Haltbarkeit der Abdeckleiste zu gewährleisten, ist jedoch vorgesehen, dass das Rastelement aus Metall besteht. Besonders bevorzugt sind dabei Metalle, welche im Wesentlichen resistent gegenüber Korrosion sind, also beispielsweise Edelstahl oder Aluminium.

Eine Weiterbildung der Erfindung sieht vor, dass wenigstens eines der Bauelemente eine Solareinrichtung, insbesondere ein Solarmodul, ein Solarkollektor oder ein Solarkombinationsmodul, bestehend aus Solarmodul und Solarkollektor, ist. Vorzugsweise liegen alle Bauelemente als Solareinrichtung vor. Es kann jedoch auch vorgesehen sein, dass lediglich eines oder mehrere der Bauelemente als Solareinrichtung ausgebildet sind und wenigstens ein weiteres der Bauelemente beispielsweise als Dachfenster, insbesondere Wohndachfenster, vorliegt.

Die Solareinrichtung ist beispielsweise ein Solarmodul oder ein Solarkollektor. Unter Solarmodul ist dabei ein Photovoltaik-Modul zu verstehen, welches dazu dient, Sonneneinstrahlung in elektrische Energie umzusetzen. Der Solarkollektor dient dagegen dazu, ihm zugeführtes Wasser aufgrund der Sonneneinstrahlung zu erwärmen, welches nachfolgend beispielsweise der Heizungsunterstützung dient. Alternativ kann die Solareinrichtung auch als Solarkombinationsmodul vorliegen. Dieses besteht aus mindestens einem Solarmodul und mindestens einem Solarkollektor, welche in vertikaler Richtung übereinander angeordnet sind. Bevorzugt ist dabei das Solarmodul auf der dem Dach abgewandten Seite der Solareinrichtung vorgesehen.

Eine Weiterbildung der Erfindung sieht vor, dass die Hintergriffsschiene an einem Tragrahmen eines der Bauelemente vorgesehen ist, wobei der Tragrahmen Befestigungsmittel zur Befestigung an dem Dach oder in der Öffnung des Dachs aufweist. Der Tragrahmen bildet letztlich die Unterkonstruktion zumindest eines der Bauelemente. An dem Tragrahmen sind die Hintergriffsschiene sowie eventuell vorgesehene weitere Elemente befestigt. Über den Tragrahmen sind diese somit sicher an dem Dach beziehungsweise in dessen Öffnung gehalten, weil der Tragrahmen über Befestigungsmittel an diesem befestigt ist.

Die Erfindung betrifft weiterhin ein Demontagewerkzeug zur Demontage einer Bauelementanordnung für ein Dach gemäß den vorstehenden Ausführungen. Dabei ist vorgesehen, dass das Demontagewerkzeug ein Einschubwerkzeug ist und eine Demontagezunge aufweist, die zum Lösen einer Rastverbindung zwischen einer Abdeckleiste und wenigstens einem Bauelement der Bauelementanordnung anordenbar ist und zur Erzeugung einer ein Rastelement der Abdeckleiste von dem Bauelement fortverlagernden Kraft zumindest eine schiefe Ebene aufweist. Das Demontagewerkzeug dient zur Demontage der Bauelementanordnung beziehungsweise dem Entfernen der Abdeckleiste von den Bauelementen, nachdem eine Montage bereits erfolgt ist. Zur Demontage ist das Demontagewerkzeug zwischen das Rastelement der Abdeckleiste und das Bauelement einschiebbar. Es ist insoweit als Einschubwerkzeug ausgebildet. Um die zwischen der Abdeckleiste und dem Bauelement vorliegende Rastverbindung zu lösen, wird die Demontagezunge zwischen der Abdeckleiste und dem Bauelement angeordnet, so dass die an der Demontagezunge vorgesehene schiefe Ebene ein Rastelement der Abdeckleiste von dem Bauelement fort drängt.

Die Erfindung betrifft weiterhin ein Verfahren zur Montage einer Bauelementanordnung für ein Dach, insbesondere gemäß den vorstehenden Ausführungen, wobei an dem Dach oder in einer Öffnung des Dachs benachbart zueinander Bauelemente angeordnet werden und eine zwischen den Bauelementen vorliegende Stoßfuge zumindest bereichsweise von einer in einer Aufschieberichtung aufschiebbaren Abdeckleiste überfangen wird. Dabei soll die Abdeckleiste bei der Montage derart auf die Bauelemente aufgeschoben werden, dass sie in mindestens einer Raststellung mittels einer, insbesondere lösbaren Rastverbindung zumindest entgegen der Aufschieberichtung an den Bauelementen gehalten ist. Die Bauelementanordnung, welche dem Verfahren zugrunde liegt, kann gemäß den vorstehenden Ausführungen weitergebildet sein. Das erfindungsgemäße Montageverfahren ist schnell und einfach durchführbar, insbesondere ohne eine kraftschlüssige Befestigung, beispielsweise mittels einer Schraube, der Abdeckleiste an den Bauelementen vornehmen zu müssen. Zudem ist die erfindungsgemäß befestigte Abdeckleiste unempfindlicher gegenüber auf die Abdeckleiste wirkender Kräfte, beispielsweise Schnee- oder Eiskräfte, als Abdeckleisten von aus dem Stand der Technik bekannten Bauelementanordnungen.

Eine Weiterbildung der Erfindung sieht vor, dass bei einer Demontage die Rastverbindung mittels eines Demontagewerkzeugs gelöst und die Abdeckleiste entfernt wird. Das Verfahren betrifft also nicht nur die Montage der Bauelementanordnung, sondern auch deren Demontage. Bei dieser ist es vorgesehen, dass das Demontagewerkzeug verwendet wird, um die Rastverbindung zu lösen. Anschließend kann die Abdeckleiste entfernt werden, insbesondere durch Verlagern entgegen der Aufschieberichtung.

Die Erfindung wird nachfolgend anhand der in der Zeichnung dargestellten Ausführungsbeispiele näher erläutert, ohne dass eine Beschränkung der Erfindung erfolgt. Es zeigen:
- Figur 1: eine Bauelementanordnung für ein Dach mit zwei benachbart zueinander angeordneten Bauelementen,
- Figur 2: eine Stoßfuge, welche zwischen den in der Figur 1 dargestellten Bauelementen vorliegt, wobei die Stoßfuge zumindest bereichsweise von einer Abdeckleiste überfangen ist,
- Figur 3: eine Schnittansicht von Tragrahmen der Bauelemente, wobei auf den Tragrahmen jeweils eine Hintergriffsschiene vorgesehen ist, welche eine Führung für ein Aufschieben der Abdeckleiste bilden,
- Figur 4: eine Ansicht der Abdeckleiste von unten, wobei ein mit der Abdeckleiste verbundenes Rastelement dargestellt ist,
- Figur 5: ein erster Schritt einer Montage der Bauelementanordnung,
- Figur 6: ein zweiter Schritt der Montage,
- Figur 7: ein dritter Schritt der Montage,
- Figur 8: ein erster Schritt einer Demontage der Bauelementanordnung,
- Figur 9: ein zweiter Schritt der Demontage,
- Figur 10: ein dritter Schritt der Demontage, und
- Figur 11: ein vierter Schritt der Demontage.

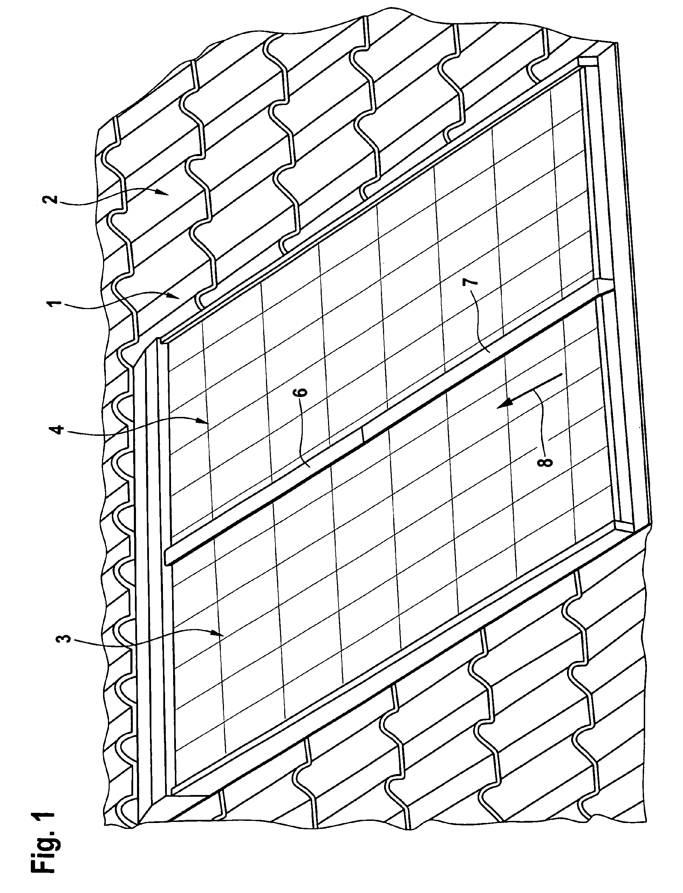

Die Figur 1 zeigt eine Bauelementanordnung 1 für ein Dach 2. Die Bauelementanordnung 1 verfügt über benachbart zueinander anzuordnende Bauelemente 3 und 4. Wenigstens eines der Bauelemente 3 und 4 ist als Solareinrichtung ausgebildet. In dem in der Figur 1 dargestellten Ausführungsbeispiel sind beide Bauelemente 3 und 4 als Solareinrichtung, nämlich als Solarmodul, ausgebildet. Das Solarmodul entspricht dabei einem Photovoltaik-Modul, ist also dazu geeignet, Sonnenenergie in elektrische Energie umzuwandeln. Alternativ oder zusätzlich kann mindestens eines der Bauelemente 3 und 4 auch als Solarkollektor oder als Solarkombinationsmodul, bestehend aus Solarmodul und Solarkollektor, ausgebildet sein.

Die Bauelemente 3 und 4 sind benachbart zueinander angeordnet, wobei hier eine Anordnung nebeneinander dargestellt ist. Durch diese Anordnung liegt zwischen den Bauelementen eine hier nicht zu erkennende Stoßfuge 5 vor. Diese ist zumindest bereichsweise, in dem hier dargestellten Ausführungsbeispiel vollständig, von zwei Abdeckleisten 6 und 7 überfangen. Die Abdeckleisten 6 und 7 sind auf die Bauelemente aufschiebbar, wobei das Aufschieben in einer Aufschieberichtung vorgesehen ist, welche durch den Pfeil 8 angedeutet ist.

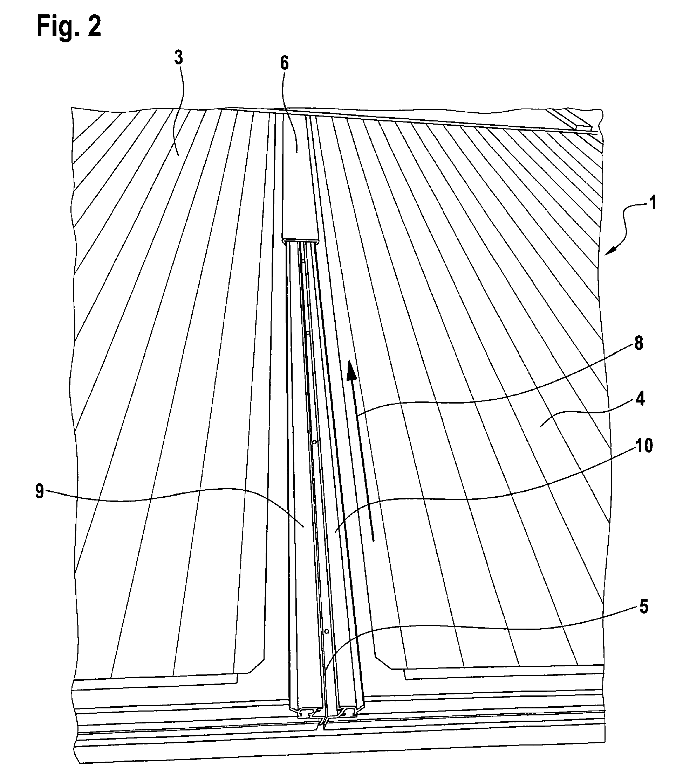

In der Figur 2 ist die Bauelementanordnung 1 in einem vor Fertigstellung der Montage der Bauelementanordnung 1 vorliegenden Zustand gezeigt. Dabei ist insbesondere erst die Abdeckleiste 6, nicht jedoch die Abdeckleiste 7 montiert. Daher ist in der Figur 2 die Stoßfuge 5 zu erkennen, welche zwischen den Bauelementen 3 und 4 vorliegt. Jedes der Bauelemente 3 und 4 verfügt über mindestens eine Hintergriffsschiene 9 beziehungsweise 10. Dabei sind jeweils zwei der Hintergriffsschienen 9 und 10 einander zugeordnet und unmittelbar benachbart zueinander angeordnet, wie in Figur 2 dargestellt. Das bedeutet, dass die Hintergriffschiene 9 des Bauelements 3 auf der dem Bauelement 4 zugewandten Seite des Bauelements 3 angeordnet ist, während die Hintergriffsschiene 10 des Bauelements 4 auf der dem Bauelement 3 zugewandten Seite des Bauelements 4 vorliegt. Die Hintergriffsschienen 9 und 10 sind derart im Bereich der Ränder der Bauelemente 3 und 4 angeordnet, dass zwischen ihnen - ebenso wie zwischen den Bauelementen 3 und 4 - die Stoßfuge 5 vorliegt. Die Abdeckleisten 6 und 7 sind nun dafür vorgesehen, die Hintergriffsschienen 9 und 10 zumindest in lateraler Richtung (senkrecht zu der Aufschieberichtung und parallel zu dem Dach 2 beziehungsweise zu den Dachelementen 3 und 4) zu überdecken und damit die Stoßfuge 5 zumindest bereichsweise, vorzugsweise jedoch vollständig, zu überfangen.

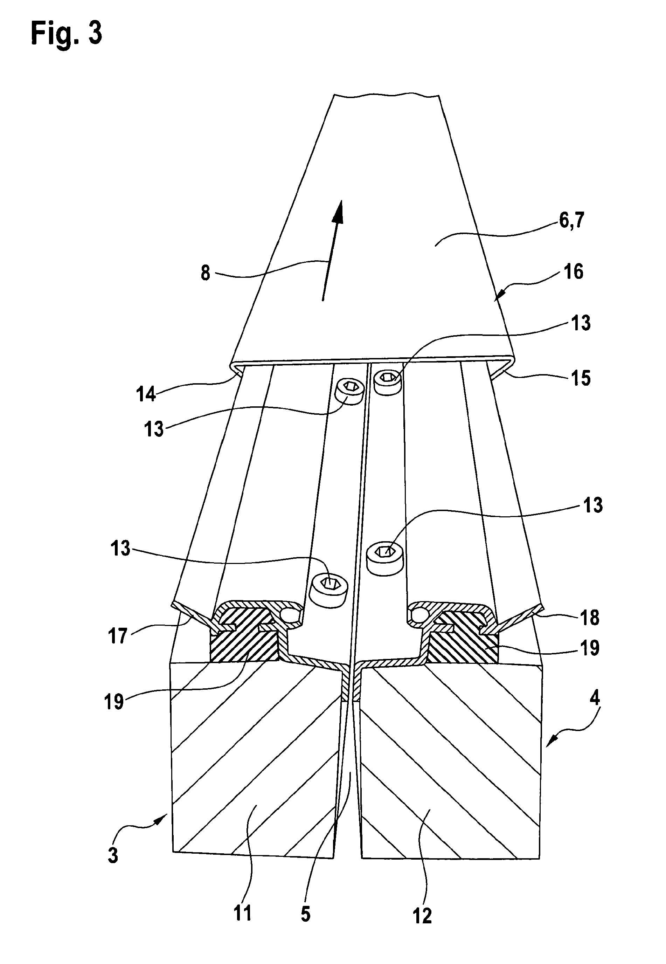

Die Figur 3 zeigt, dass die Bauelemente 3 und 4 jeweils über einen Tragrahmen 11 beziehungsweise 12 verfügen. Auf den Tragrahmen 11 und 12 sind jeweils die Hintergriffsschienen 9 und 10 mit Befestigungsmitteln 13 befestigt. In der Figur 3 ist deutlich zu erkennen, dass die Abdeckleiste 6 beziehungsweise 7 zwei Hintergriffsbereiche 14 und 15 aufweist, welche die Hintergriffsschienen 9 und 10 jeweils hintergreifen und so eine Führung 16 für das Aufschieben der Abdeckleiste 6 beziehungsweise 7 bilden. Genauer gesagt weisen die Hintergriffsschienen 9 und 10 Hintergriffsflügel 17 und 18 auf, welche sich in entgegengesetzte laterale Richtungen erstrecken. Dabei wird der Hintergriffsflügel 17 von dem Hintergriffsbereich 14 und der Hintergriffsflügel 18 von dem Hintergriffsbereich 15 zur Ausbildung der Führung 16 hintergriffen. Die Führung 16 lässt lediglich das Aufschieben der Abdeckleiste 6 beziehungsweise 7 in Richtung der Aufschieberichtung (Pfeil 8) beziehungsweise in umgekehrte Richtung zu, nicht jedoch ein Verlagern in lateraler oder vertikaler Richtung. Zwischen den Hintergriffsschienen 9 und 10 und den Tragrahmen 11 und 12 kann jeweils eine Dichtung 19 vorgesehen sein.

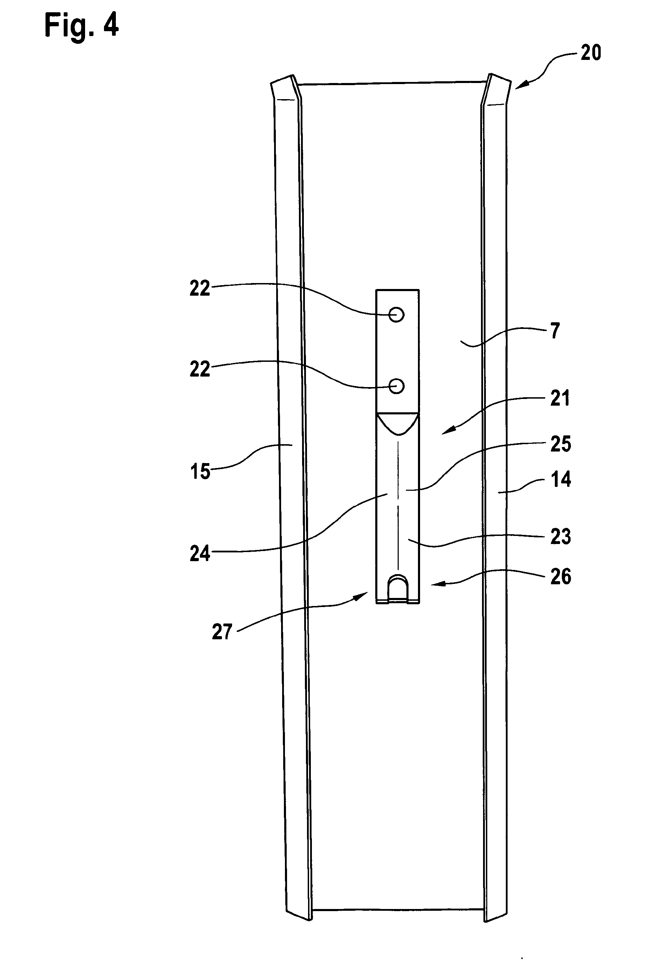

Die Figur 4 zeigt die Abdeckleiste 7 in einer Ansicht von unten. Dabei wird zunächst deutlich, dass die Abdeckleiste 7 in ihrem oberen Bereich eine Aufweitung 20 aufweist. Diese dient dazu, die oberhalb der Abdeckleiste 7 angeordnete Abdeckleiste 6 in sich aufzunehmen und somit einen sauberen und optisch einwandfreien Übergang zwischen den Abdeckleisten 6 und 7 zu ermöglichen. Die Abdeckleiste 7 wird demnach bei der Montage die Abdeckleiste 6 zumindest bereichsweise überstülpend angeordnet.

Auf der Unterseite der Abdeckleiste 7 ist ein Rastelement 21 angeordnet. In dem vorliegenden Fall ist das Rastelement 21 mittels Durchsetzfügen (auch als "Toxen" bezeichnet) an der Abdeckleiste 7 befestigt. Aus diesem Grund sind Durchsetzpunkte 22 zu erkennen. Das Rastelement 21 liegt als Rastzunge 23 vor, welche aus zwei in Längsrichtung gegeneinander angewinkelten Schenkeln 24 und 25 besteht. Diese dienen zur Versteifung des Rastelements 21 gegenüber Verbiegen. Alternativ kann das Rastelement 21 selbstverständlich auch eben, also ohne die gegeneinander angewinkelten Schenkel 24 und 25, ausgebildet sein.

Das Rastelement 21 ist federnd an der Abdeckleiste 7 gehalten. Die Federwirkung kann dabei entweder von dem Rastelement 21 oder der Abdeckleiste 7 bewirkt werden. Weil bei dem vorliegenden Fall das Rastelement 21 als im Wesentlichen steife Rastzunge 23 vorliegt, wird die Federwirkung allein durch elastische Verformung der Abdeckleiste 7 erzeugt. Die Federwirkung dient dabei dazu, mindestens einen Rastbereich 26, welcher auf der der Befestigung beziehungsweise den Durchsetzpunkten 22 abgewandten Seite des Rastelements 21 vorliegt, in Richtung der Bauelement 3 und 4 zu drängen. Neben dem Rastbereich 26 weist das Rastelement 21 einen Betätigungsbereich 27 auf, mittels welchem eine mit dem Rastelement 21 hergestellte Rastverbindung gelöst werden kann. Dies wird nachfolgend beschrieben.

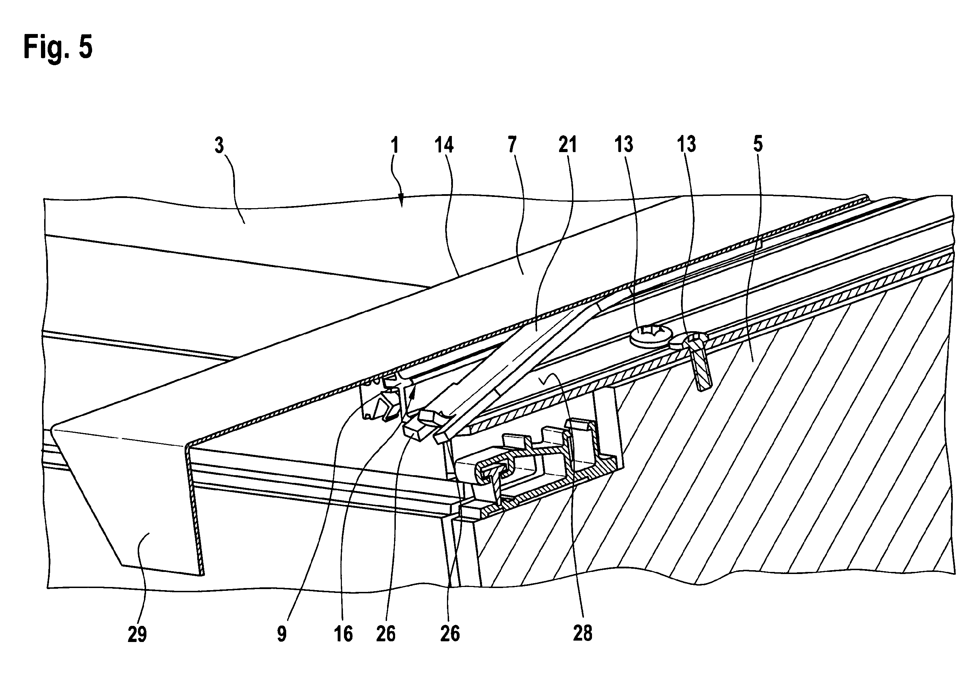

Die Figur 5 zeigt einen ersten Montageschritt der Bauelementanordnung 1 beziehungsweise der Abdeckleiste 7. Die Bauelementanordnung 1 ist dabei zwischen dem Bauelement 3 und dem nicht sichtbaren Bauelement 4 geschnitten, um den Bereich der Stoßfuge 5 erkennbar zu machen. Die Schnittebene entspricht hier im Wesentlichen der Mitte der Stoßfuge 5. In dem ersten Montageschritt der Bauelementanordnung 1 wird die Abdeckleiste 7 über der Stoßfuge 5 beziehungsweise den Bauelementen 3 und 4 angeordnet, so dass sie in einer ersten Montagestellung vorliegt. Dabei greifen die Hintergriffsbereiche 14 und 15 in die Hintergriffsschienen 9 und 10 (letztere ist aufgrund der geschnittenen Darstellung nicht erkennbar) zur Ausbildung der Führung 16 ein. Die Abmessungen des Rastelements 21 in vertikaler Richtung sind dabei vorzugsweise derart bemessen, dass der Rastbereich 26 auf einem Boden 28 eines von den Hintergriffsschienen 9 und 10 gebildeten Zwischenraums aufliegt oder allenfalls einen geringen Abstand zu diesem aufweist. Eine Stirnseite 29 der Abdeckleiste 7 befindet sich in seiner Auslieferungsposition, in welcher er in der endgültigen Montagestellung der Abdeckleiste 7 mit den Hintergriffsschienen 9 und 10 abschließt und den zwischen diesen vorliegenden Zwischenraum begrenzt.

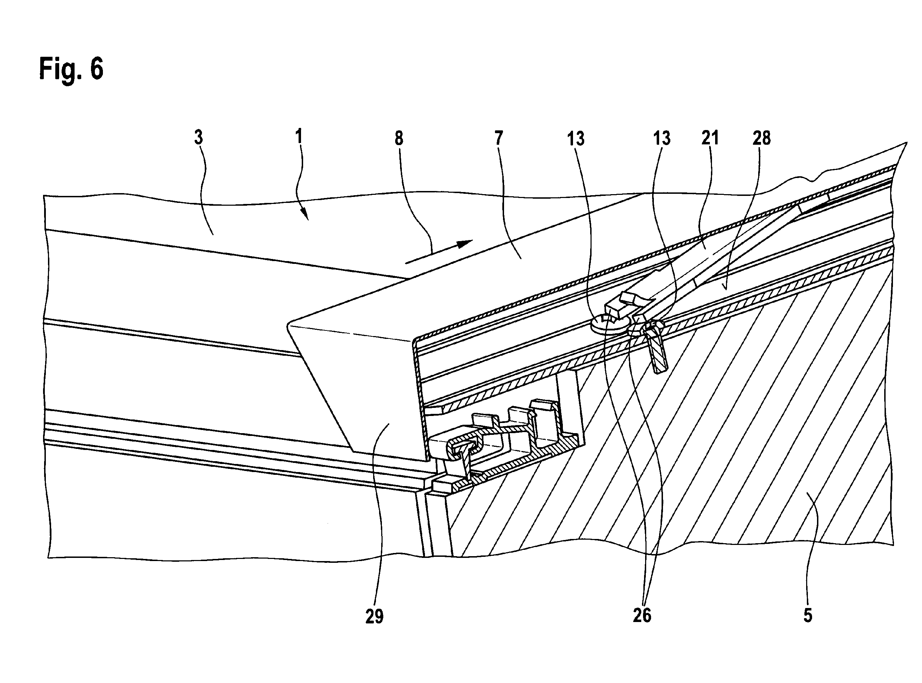

Die Figur 6 zeigt die Bauelementanordnung 1 in einem zweiten Montageschritt. Im Vergleich zu dem ersten Montageschritt wurde die Abdeckleiste 7 in Richtung der Aufschieberichtung (Pfeil 8) derart verlagert, dass das Rastelement 21 beziehungsweise dessen Rastbereiche 26 von den Befestigungsmitteln 13 elastisch in vertikaler Richtung von den Bauelementen 3 und 4 beziehungsweise den Boden 28 fortgedrängt wird. Das Rastelement 21 beziehungsweise dessen Rastbereich 26 liegt demnach nicht mehr auf dem Boden 28, sondern auf den Befestigungsmitteln 13 auf. Die Abdeckleiste 7 liegt in der Figur 6 in einer zweiten Montagestellung vor.

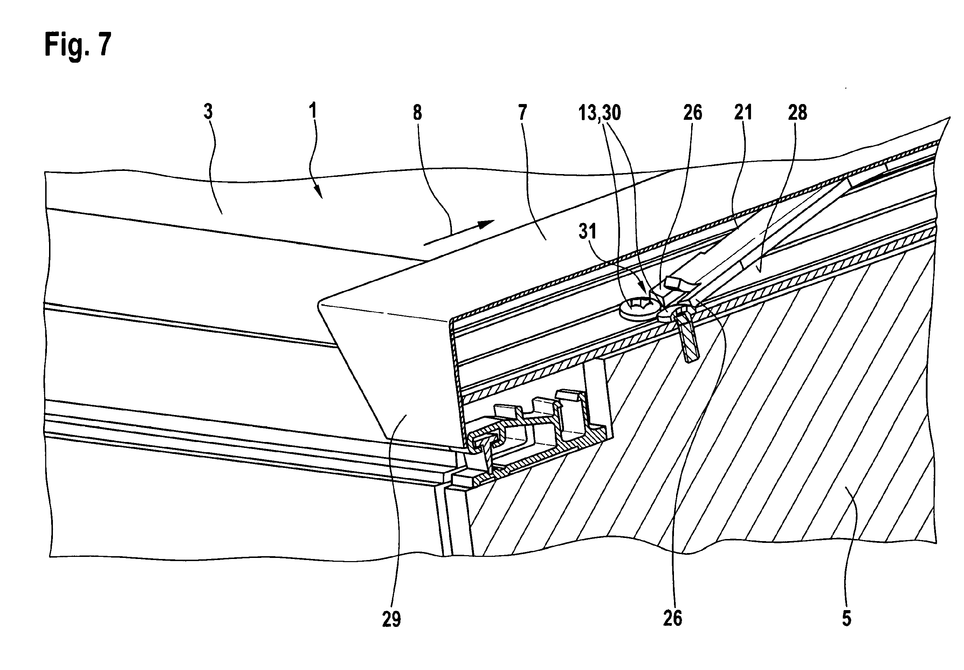

Die Figur 7 zeigt einen dritten Montageschritt der Bauelementanordnung 1, in welchem die Abdeckleiste 7 ihre dritte, endgültige Montagestellung erreicht hat. Dazu wurde sie, ausgehend von der zweiten Montageposition, weiter in Aufschieberichtung (Pfeil 8) verlagert. Das Rastelement 21 beziehungsweise sein Rastbereich 26 liegen in dieser Position unmittelbar hinter den Befestigungsmitteln 13 auf dem Boden 28 auf, in dessen Richtung sie durch die Federwirkung gedrängt werden. Das Rastelement 21 wirkt in dieser Stellung mit den als Rastgegenelementen 30 funktionierenden Befestigungsmitteln 13 rastend zusammen, sodass eine Rastverbindung 31 geschaffen ist, welche die Abdeckleiste 7 in einer hier vorliegenden Raststellung der Abdeckleiste 7 entgegen der Aufschieberichtung an den Bauelementen 3 und 4 hält. Die Abdeckleiste 7 kann somit aus der Raststellung nicht entgegen der Aufschieberichtung verlagert werden, um sie wieder von den Bauelementen 3 und 4 abzunehmen. In der Montagestellung schließt die Stirnseite 29 mit den Bauelementen 3 und 4 ab, sodass von außen die Rastverbindung 31 nicht sichtbar ist.

Gleichzeitig dient der Endbereich 29 als Endanschlag, verhindert also, dass die Abdeckleiste 7 weiter in Aufschieberichtung verlagert wird. Somit ist die Abdeckleiste 7 sicher an den Bauelementen 3 und 4 gehalten. Gleichzeitig wird ein hervorragender optischer Eindruck der Bauelementanordnung 1 erzielt, weil von außen die Rastverbindung 31 und auch andere Befestigungsmittel nicht sichtbar sind.

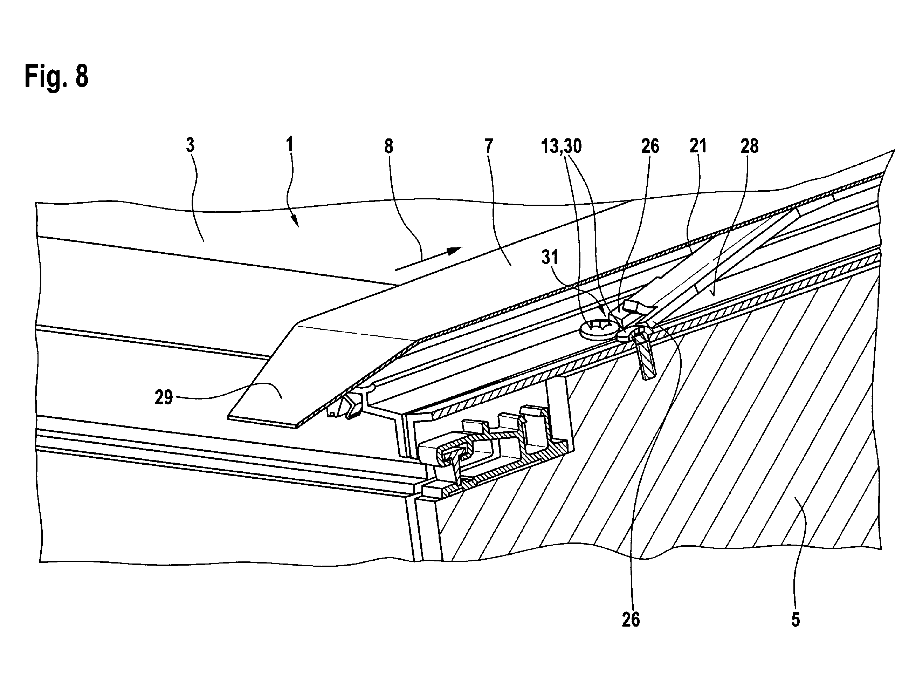

Die Figur 8 zeigt einen ersten Demontageschritt der Bauelementanordnung 1. Bei der Demontage soll die Abdeckleiste 7 von den Bauelementen 3 und 4 entfernt werden. Jedoch verhindert die Rastverbindung 31 ein Verlagern der Abdeckleiste 7 entgegen der Aufschieberichtung. Aus diesem Grund muss zunächst die Rastverbindung 31 gelöst werden. Zu diesem Zweck wird auf der Stirnseite 29 ein Zugang geschaffen, durch welchen ein Demontagewerkzeug 32 einbringbar ist. Dies kann beispielsweise durch Aufbiegen eines Bereichs der Abdeckleiste 7 erfolgen.

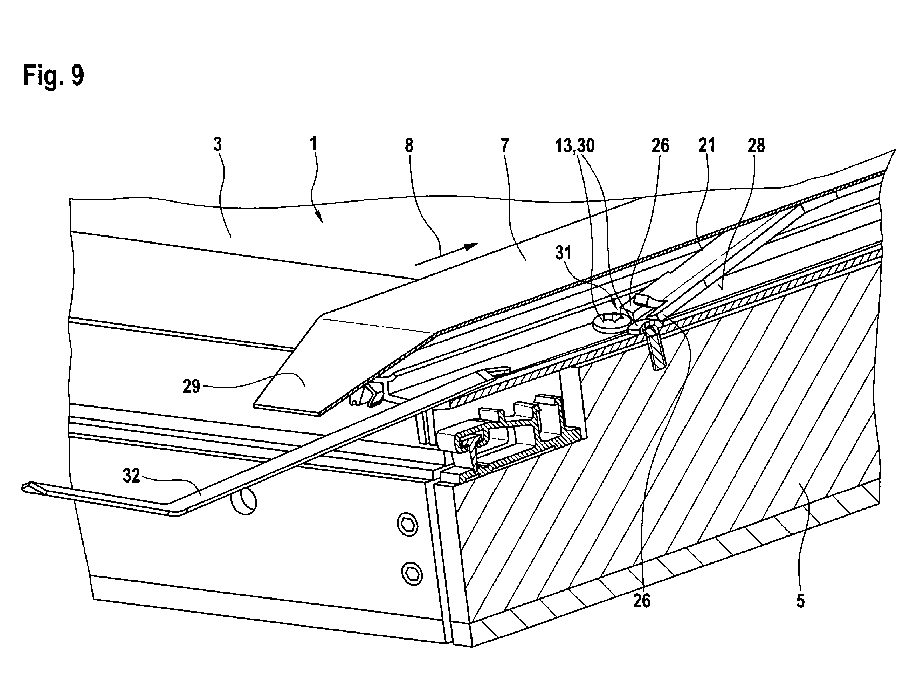

Das Demontagewerkzeug 32 ist in der Figur 9 gezeigt, in welcher ein zweiter Demontageschritt dargestellt ist. Das Demontagewerkzeug 32 wird zur Demontage der Abdeckleiste 7 zwischen der Abdeckleiste 7 und den Bauelementen 3 und 4 in Richtung der Rastverbindung 31 verlagert.

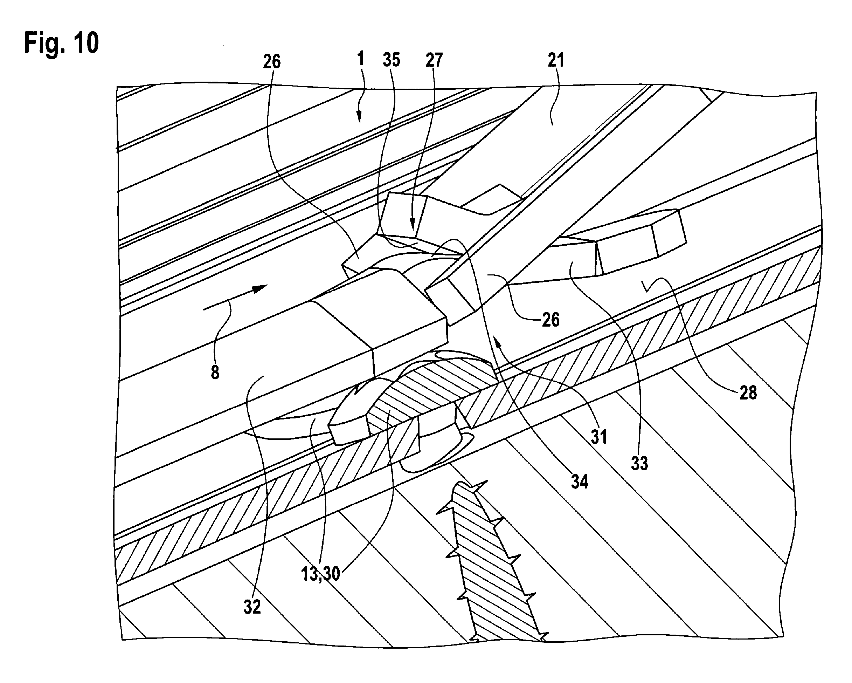

Die Figur 10 zeigt einen dritten Demontageschritt der Bauelementanordnung 1. Dabei hat das Demontagewerkzeug 32 eine Demontagestellung erreicht. In dieser greift das Demontagewerkzeug 32 mit einer Demontagezunge 33 in den an das Demontagewerkzeug 32 angepassten Betätigungsbereich 27 ein. Sie ist insoweit zwischen der Abdeckleiste 7 beziehungsweise deren Rastelement 21 und zumindest einem der Bauelementen 3 und 4 angeordnet. Sowohl die Demontagezunge 33 als auch der Betätigungsbereich 27 weisen eine schiefe Ebene 34 beziehungsweise 35 auf. Die beiden schiefen Ebenen 34 und 35 wirken in der in der Figur 10 dargestellten Demontagestellung zusammen, um das Rastelement 21 von den Bauelementen 3 und 4 fortzuverlagern. Dabei sind das Demontagewerkzeug 32 und der Betätigungsbereich 27 beziehungsweise die schiefen Ebenen 34 und 35 derart aufeinander abgestimmt, dass das Rastelement 21 beziehungsweise dessen Rastbereich 26 in vertikaler Richtung über die Rastgegenelemente 30 gehoben wird, sodass die Rastverbindung 31 gelöst ist und das Rastelement 21 über die Rastgegenelemente 30 hinweg entgegen der Aufschieberichtung verlagerbar ist.

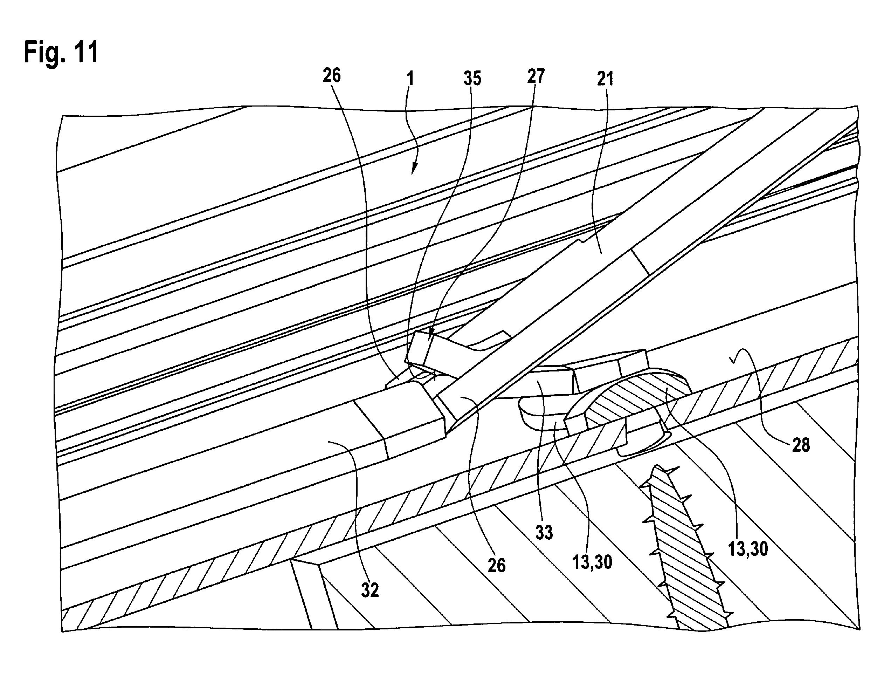

Anschließend kann, wie in der Figur 11 dargestellt, in einem vierten Demontageschritt die Abdeckleiste 7 entgegen der Aufschieberichtung verlagert und so von den Bauelementen 3 und 4 entfernt werden. Die Demontagezunge 33 des Demontagewerkzeugs 32 kann derart ausgestaltet sein, dass sie zwischen den Rastgegenelementen 30 hindurchgelangen kann. Alternativ kann sie über diese hinweggleiten.

Insgesamt liegt somit eine Bauelementanordnung 1 vor, welche sich durch ihre einfache Montage und Demontage auszeichnet. Gleichzeitig ist ein hervorragender optischer Eindruck sichergestellt, weil die Rastverbindung 31 und sonstige Befestigungsmittel von außen nicht sichtbar sind. Zudem ist ein beschädigungsfreies Lösen der Rastverbindung 31 und damit ein beschädigungsfreies Abnehmen der Abdeckleiste 6 beziehungsweise 7 von den Bauelementen 3 und 4 möglich.

## Patentansprüche

1. Bauelementanordnung (1) für ein Dach (2), mit an dem Dach (2) oder in einer Öffnung des Dachs (2) benachbart zueinander anzuordnenden Bauelementen (3,4), wobei wenigstens eine zwischen den Bauelementen (3,4) vorliegende Stoßfuge (5) zumindest bereichsweise von einer in einer Aufschieberichtung (8) auf die Bauelemente (3,4) aufschiebbaren Abdeckleiste (6,7) überfangen ist, **dadurch gekennzeichnet, dass** die Abdeckleiste (6,7) in mindestens einer Raststellung mittels einer, insbesondere lösbaren Rastverbindung (31) zumindest entgegen der Aufschieberichtung (8) an den Bauelementen (3,4) gehalten ist.

2. Bauelementanordnung nach Anspruch 1, **dadurch gekennzeichnet, dass** die Abdeckleiste (6,7) zum Ausbilden der Rastverbindung (31) mindestens ein Rastelement (21) aufweist und an wenigstens einem der Bauelemente (3,4) ein entsprechendes Rastgegenelement (30) vorgesehen ist, wobei das Rastelement (21) in der Raststellung der Abdeckleiste (6,7) mit dem Rastgegenelement (30) rastend zusammenwirkt.

3. Bauelementanordnung nach einem der vorhergehenden Ansprüche, **dadurch gekennzeichnet, dass** die Bauelemente (3,4) wenigstens eine Hintergriffsschiene (9,10) aufweisen, die von einem Hintergriffsbereich (14,15) der Abdeckleiste (6,7) hintergriffen ist und so eine Führung (16) für das Aufschieben der Abdeckleiste (6,7) bilden.

4. Bauelementanordnung nach einem der vorhergehenden Ansprüche, **dadurch gekennzeichnet, dass** die Hintergriffsschiene (9,10) über wenigstens ein Befestigungsmittel (13) mit den Bauelementen (3,4) verbunden ist und das Befestigungsmittel (13) zumindest bereichsweise das Rastgegenelement (30) bildet.

5. Bauelementanordnung nach einem der vorhergehenden Ansprüche, **dadurch gekennzeichnet, dass** das Rastelement (21) federnd an der Abdeckleiste (6,7) gehalten ist, wobei das Rastelement (21) und/oder die Abdeckleiste (6,7) die Federwirkung bewirken, welche einen Rastbereich (26) des Rastelements (21) in Richtung der Bauelemente (3,4) drängt.

6. Bauelementanordnung nach einem der vorhergehenden Ansprüche, **dadurch gekennzeichnet, dass** das Rastelement (21) einen an ein Demontagewerkzeug (32) angepassten Betätigungsbereich (27) aufweist.

7. Bauelementanordnung nach einem der vorhergehenden Ansprüche, **dadurch gekennzeichnet, dass** der Betätigungsbereich (27) eine Durchtrittsöffnung aufweist, durch welche das Demontagewerkzeug (32) zwischen Rastelement (21) und wenigstens einem der Bauelemente (3,4) zur Erzeugung, insbesondere durch Hebelwirkung, einer das Rastelement (21) von dem Bauelement (3,4) fortverlagernden Kraft anordenbar ist.

8. Bauelementanordnung nach einem der vorhergehenden Ansprüche, **dadurch gekennzeichnet, dass** das Rastelement (21) mittels Durchsetzfügen an der Abdeckleiste (6,7) befestigt ist.

9. Bauelementanordnung nach einem der vorhergehenden Ansprüche, **dadurch gekennzeichnet, dass** das Rastelement (21) eine Rastzunge (23) ist, die zur Versteifung in Längsrichtung zwei gegeneinander angewinkelte Schenkel (24,25) aufweist.

10. Bauelementanordnung nach einem der vorhergehenden Ansprüche, **dadurch gekennzeichnet, dass** das Rastelement (21) aus Metall, insbesondere Stahl, vorzugsweise Edelstahl, oder Aluminium besteht.

11. Bauelementanordnung nach einem der vorhergehenden Ansprüche, **dadurch gekennzeichnet, dass** wenigstens eines der Bauelemente (3,4) eine Solareinrichtung, insbesondere ein Solarmodul, ein Solarkollektor oder ein Solarkombinationsmodul, bestehend aus Solarmodul und Solarkollektor, ist.

12. Bauelementanordnung nach einem der vorhergehenden Ansprüche, **dadurch gekennzeichnet, dass** die Hintergriffsschiene (9,10) an einem Tragrahmen (11,12) eines der Bauelemente (3,4) vorgesehen ist, wobei der Tragrahmen (11,12) Befestigungsmittel zur Befestigung an dem Dach (2) oder in der Öffnung des Dachs (2) aufweist.

13. Demontagewerkzeug (32) zur Demontage einer Bauelementanordnung (1) für ein Dach (2) nach einem oder mehreren der vorhergehenden Ansprüche, **dadurch gekennzeichnet, dass** das Demontagewerkzeug (32) ein Einschubwerkzeug ist und eine Demontagezunge (33) aufweist, die zum Lösen einer Rastverbindung (31) zwischen einer Abdeckleiste (6,7) und wenigstens einem Bauelement (3,4) der Bauelementanordnung (1) anordenbar ist und zur Erzeugung einer ein Rastelement (21) der Abdeckleiste (6,7) von dem Bauelement (3,4) fortverlagernden Kraft zumindest eine schiefe Ebene (34) aufweist.

14. Verfahren zur Montage einer Bauelementanordnung (1) für ein Dach (2), insbesondere nach einem oder mehreren der vorhergehenden Ansprüche, wobei an dem Dach (2) oder in einer Öffnung des Dachs (2) benachbart zueinander Bauelemente (3,4) angeordnet werden und eine zwischen den Bauelementen (3,4) vorliegende Stoßfuge (5) zumindest bereichsweise von einer in einer Aufschieberichtung aufschiebbaren Abdeckleiste (6,7) überfangen wird, **dadurch gekennzeichnet, dass** die Abdeckleiste (6,7) bei der Montage derart auf die Bauelemente (3,4) aufgeschoben wird, dass sie in mindestens einer Raststellung mittels einer, insbesondere lösbaren Rastverbindung (31) zumindest entgegen der Aufschieberichtung an den Bauelementen (3,4) gehalten ist.

15. Verfahren nach Anspruch 14, **dadurch gekennzeichnet, dass** bei einer Demontage die Rastverbindung (31) mittels eines Demontagewerkzeugs (32) gelöst und die Abdeckleiste (6,7) entfernt wird.
